# FASCICULE DE BREVET EUROPEEN

(11) **EP 3 936 732 B1**
(45) Date de publication et mention de la délivrance du brevet: **15.03.2023**
(21) Numéro de dépôt: 20185189.6
(22) Date de dépôt: 10.07.2020
(51) Int. Cl.: F16B 31/02, F16B 33/00, G04B 37/10, G04B 39/00, F16B 33/04, G04B 3/04, G04B 37/00

(54) **ORGANE HORLOGER FILETÉ**
UHRORGAN MIT GEWINDE
THREADED TIMEPIECE MEMBER

(43) Date de publication de la demande: 12.01.2022
(73) Titulaire: ROLEX SA, 1211 Genève 26 (CH)
(72) Inventeur: JUNOD, Benoît, 74250 Peillonnex (FR); NAGEL, Patrice, 1211 Genève (CH); ROBIN, Jean-Baptiste, 74100 Annemasse (FR)
(74) Mandataire: Moinas & Savoye SARL

(56) Documents cités:
- EP-A1- 0 575 277
- EP-B1- 0 575 277
- WO-A1-2013/072389

## Description

L'invention concerne un organe fileté pour pièce d'horlogerie. L'invention concerne aussi une boîte de pièce d'horlogerie comprenant un tel organe fileté. L'invention concerne encore une pièce d'horlogerie comprenant un tel organe fileté et/ou une telle boîte de pièce d'horlogerie.

L'habillage des montres obéit à de nombreuses contraintes, en particulier d'étanchéité, de robustesse, d'aspect, et doit être réalisé de façon à prévenir tout démontage involontaire se traduisant irrémédiablement par une intervention d'après-vente pour échange de joints, nettoyage, lubrification, voire réparation.

Pour les pièces dont le comportement mécanique est de type fragile, par exemple en céramique (zircone, alumine, composites, etc.), en verre, en saphir, etc... devant assurer l'étanchéité et/ou devant pouvoir être assemblées et désassemblées, par exemple les fonds ou les mailles de bracelet, il est considéré que les modes d'assemblage traditionnels ne sont pas adaptés.

En effet, les matériaux fragiles, comme la céramique, le verre, le saphir, etc... ont une très bonne résistance en compression mais une mauvaise résistance en traction. C'est pourquoi on considère les systèmes filetés en matériaux fragiles comme non adaptés pour des assemblages soumis à une sollicitation en traction conséquente. Par exemple, lorsque le couple de serrage est trop important, des contraintes en traction et/ou en cisaillement sont générées sur le filetage entraînant une fissuration, voir une rupture de ce dernier.

Leur usage est de ce fait essentiellement limité aux domaines mettant à profit les autres caractéristiques de la céramique (résistance chimique, tenue aux températures extrêmes, amagnétisme, biocompatibilité, etc...) avec des contraintes mécaniques limitées.

On connaît déjà des pièces d'horlogerie dont le boîtier comporte un ou plusieurs éléments d'habillage réalisé(s) en un matériau minéral dur naturel ou synthétique tel que le saphir, la céramique, une pierre naturelle ou reconstituée, etc. Ces matériaux ne sont pas ductiles et n'ont que peu de capacité à amortir un choc en se déformant. Ceci implique une résistance aux contraintes de traction inférieure à celle de pièces de même géométrie en métal. En général, cette faible résistance aux contraintes de traction n'est pas compatible avec les contraintes subies par la pièce (assemblage, surpression, etc.).

L'assemblage d'un fond métallique sur une carrure métallique se fait traditionnellement par vissage comme décrit entre autre dans les documents CH1359773 et CH486059. Les filetages sont normalisés et les filetages intérieur et extérieur sont réalisés selon la même norme avec une zone de contact des filets la plus grande possible.

Pour garantir la sécurisation du montage et minimiser les risques de grippage, un fond métallique assemblé avec une carrure métallique est en général lubrifié et serré avec un couple compris entre 1 et 6 N.m. Un tel fond peut de plus être amené à supporter des surpressions, notamment lors de plongées.

Afin de garantir que l'on puisse utiliser les mêmes outils de montage/démontage que pour des fonds métalliques, le filetage d'un fond en matériau fragile devrait résister au même couple de serrage, c'est-à-dire 1 et 6 N.m. Il devrait également supporter des surpressions en fonction du degré d'étanchéité envisagé (p.ex. étanchéité jusqu'à 50m, 100m, 1220m ou 3900m).

Si un filetage en céramique est réalisé selon les normes standards, les contraintes de traction générées par le serrage et/ou la surpression dépassent la résistance de la céramique, entraînant des déformations irréversibles, des fissurations, voire une rupture, en particulier au niveau des filets.

On connaît également des systèmes d'assemblage fileté autobloquant comme celui décrit dans le document WO2013/072389 dont le diamètre nominal est inférieur à 1.5mm et dont l'élément taraudé présentant un deuxième filet dont la section longitudinale possède un pas de profil asymétrique. L'assemblage correspond notamment aux normes de l'horlogerie suisse (NIHS) et aux normes internes aux horlogers. Le contact continu entre les éléments de l'assemblage permet de répartir les efforts de traction sur la longueur totale du filet des parties filetées en contact et donc de réduire la fatigue du système vis/écrou.

Pour garantir que les deux parties d'un assemblage fileté (interne et externe) s'adaptent correctement et supportent une charge spécifiée, les filets doivent respecter certaines normes. Les filetages y sont définis par leur profil, qui incorpore les diamètres de la pièce (diamètre extérieur, intérieur, etc.), l'angle du profil, le pas, et le cas échéant l'angle d'hélice.

Diverses normes décrivent la forme d'un filetage, notamment l'angle du profil de filets, le pas et le diamètre du filetage, par exemple NIHS 60-30, ISO (par exemple EN 10226-1 ou ISO 261), UN (par exemple ASME B1.1), Whitworth, British Standard (BSPT), American National, Pipe Threads, NPT, NPTF, DIN 405, MJ, UNJ, etc.

La désignation complète donne les valeurs correspondant à la forme du filet et les tolérances.

Par exemple, la section d'un filetage présentant des profils de filet NIHS, ISO et UN s'apparente à un triangle équilatéral, c'est-à-dire que les flancs des filets sont à 60 degrés (angle entre flancs). Pour les filetages Whitworth, les flancs de filets forment un angle de 55 degrés.

Les assemblages de composants en céramique sur des composants métalliques sont généralement réalisés par d'autres moyens que le vissage au sein de la céramique, ou alors le vissage est fiabilisé par l'intégration de douilles filetées métalliques au sein de la pièce en céramique.

Le document EP0520224 décrit une boîte de montre comportant une carrure métallique et un fond en céramique. Le fond en céramique est fixé sur la carrure par l'intermédiaire de vis, les vis étant vissées, au travers du fond, dans des taraudages pratiqués dans la carrure.

Le document EP1916576 décrit une boîte de montre comportant une carrure métallique et un fond en céramique. Le fond en céramique 1 est maintenu sur la carrure par l'intermédiaire d'une bague de serrage métallique filetée.

Le document EP3276432 décrit un assemblage adapté pour fixer un fond en céramique ou en saphir sur une carrure en céramique ou en métal, notamment en or. Il divulgue que l'homme du métier est d'avis que la très faible ductilité des matériaux céramiques n'autorise pas des modes de fixation standard, en particulier le vissage direct. Pour pallier ce problème, ce document propose une connexion avec une géométrie spécifique de type baïonnette comprimant une bague. Le choix du matériau de la bague détermine le couple de serrage maximal. Par exemple, une bague en alliage amorphe autorise un couple de serrage d'environ 3.2 N.m, similaire à celui usuel d'un fond vissé sur une carrure, pour un joint de même taille.

La société Apple propose des montres avec un boîtier (par exemple en aluminium) et un couvercle (portant des capteurs biométriques) en céramique, en saphir ou en verre renforcé (ion-X). Le couvercle est « clipsé » et maintenu avec un joint d'étanchéité en téflon.

En outre, un système d'assemblage par filetage (ou vissage), également désigné par « système fileté », est couramment utilisé pour fixer au moins deux pièces l'une à l'autre. Un tel système fileté est prévu pour assurer la pérennité de l'assemblage tout au long de sa durée de vie. Son intérêt provient notamment de sa simplicité (les éléments d'assemblage font partie des pièces à assembler), de sa démontabilité et des applications qui en découlent.

De façon générale, un système fileté se compose d'un premier élément fileté par exemple sous la forme d'une vis et d'un deuxième élément fileté par exemple sous la forme d'un écrou, et son installation consiste en l'association de la vis et de l'écrou pour laquelle est appliqué un couple de serrage lors de l'opération de vissage. Le serrage de l'écrou sur la vis permet de comprimer les pièces à assembler. La vis est ainsi précontrainte. L'effort axial, auquel elle est soumise, est appelé tension. Lors du vissage, on applique un couple de serrage à la vis qui permet le mouvement hélicoïdal de celle-ci dans l'écrou et qui, lorsque les pièces sont en contact, force l'allongement de la vis et ainsi sa mise en tension. Dans un tel mode de vissage, la tension induite par serrage de l'écrou sur la vis est donc liée au couple appliqué à l'écrou. La relation entre la tension et le couple est liée à de nombreux paramètres.

Les éléments du système fileté subissent ainsi différents types de contraintes mécaniques, par exemple en traction, en compression, en cisaillement, etc.

Le but de l'invention est de fournir un organe horloger fileté permettant d'améliorer les organes connus de l'art antérieur et de remédier aux inconvénients mentionnés précédemment. En particulier, l'invention propose un organe horloger fileté, fiable et réalisé en matériau fragile.

L'invention permet le remplacement aisé d'un composant métallique par un composant en céramique sans nécessiter de modifier la conception du deuxième composant avec lequel le composant en céramique est destiné à coopérer. Elle permet en outre de conserver les mêmes outils de montage/démontage que ceux développés pour l'assemblage des composants métalliques.

Un organe horloger selon l'invention est défini par la revendication 1.

Différents modes de réalisation de l'organe horloger sont définis par les revendications 2 à 8.

Une boîte de pièce d'horlogerie selon l'invention est définie par la revendication 9.

Des modes de réalisation de boîte de pièce d'horlogerie sont définis par les revendications 10 et 11.

Une pièce d'horlogerie selon l'invention est définie par la revendication 12.

Les dessins annexés représentent, à titre d'exemple, un mode de réalisation d'une pièce d'horlogerie.
La figure 1 représente un premier mode de réalisation d'une pièce d'horlogerie.
La figure 2 illustre les évolutions d'une contrainte maximale dans un fond (S₁ₘₐₓ), en fonction du rayon de fond de filet du fond (R), pour différents angles de filet du fond.
La figure 3 illustre les évolutions d'une contrainte maximale dans un fond (S₁ₘₐₓ), en fonction du rayon de fond de filet du fond (R), pour différents assemblages ayant des caractéristiques d'angles de filet du fond et de filet de la carrure variées.

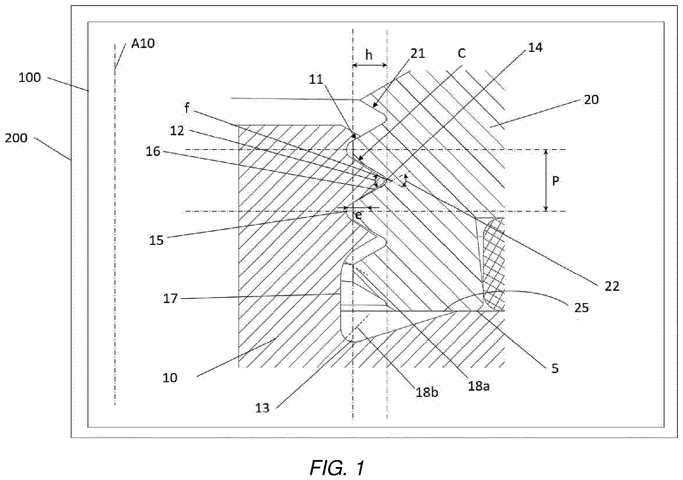

Un mode de réalisation d'une pièce d'horlogerie 200 est décrit ci-après en référence à la figure 1.

La pièce d'horlogerie 200 est par exemple une montre, en particulier une montre bracelet.

La pièce d'horlogerie 200 comprend une boîte ou un boîtier 100 de pièce d'horlogerie. La boîte 100 de pièce d'horlogerie est destinée à recevoir un mouvement afin de le protéger de l'environnement extérieur. La boîte est de préférence étanche.

Le mouvement horloger peut être un mouvement électronique ou un mouvement mécanique, notamment un mouvement automatique.

La boîte de pièce d'horlogerie comprend un premier organe 10 ou premier composant et un deuxième organe 20 ou deuxième composant destinés à être assemblés l'un à l'autre par vissage. Autrement dit, chacun des deux organes comprend un filetage et l'un des deux organes est vissé dans l'autre, par coopération des deux filetages. Les deux filetages présentent donc un même pas et, plus généralement, des caractéristiques dimensionnelles leur permettant de coopérer l'un avec l'autre.

Le premier organe horloger 10 comprend un premier axe A10 et un premier filetage 11 présentant un pas p et destiné à coopérer avec un deuxième filetage 21 prévu sur le deuxième organe horloger 20. Le premier filetage est :
- conformé ou configuré de sorte qu'une zone de contact C entre le premier filetage et le deuxième filetage s'étend sur moins de 50% de la hauteur h des filets du deuxième filetage, voire sur moins de 30% de la hauteur h des filets du deuxième filetage ; voire sur moins de 15% de la hauteur h des filets du deuxième filetage, ou
- conformé ou configuré de sorte que la zone de contact C entre le premier filetage et le deuxième filetage s'étend sur moins de 0.3 fois le pas p, voire sur moins de 0.2 fois le pas p, voire sur moins de 0.1 fois le pas p, l'étendue e de la zone de contact C étant mesurée radialement relativement au premier axe A10 depuis le fond 15 des filets du premier filetage.

Ces caractéristiques géométriques sont vérifiées de préférence sur l'intégralité ou sur la quasi-intégralité ou sur la majorité des portions de filetages qui sont en contact. Autrement, dit ces caractéristiques ne sont pas seulement vérifiées ponctuellement au niveau d'une portion d'interface de vissage entre les premier et deuxième organes.

Chaque filetage comprend un ou plusieurs filets et a globalement une forme hélicoïdale autour de l'axe A10. Chaque filet est une portion hélicoïdale dont la longueur mesurée selon l'axe vaut le pas. Le fond du filet 15 est la jonction entre deux flancs 16 de filets adjacents. Les flancs 16 de filet, c'est-à-dire les côtés des filets, correspondent aux parties situées entre le sommet 14 et les fonds 15 de filet. Le sommet 14 du filet est la portion où les deux flancs 16 d'un même filet se rejoignent.

De préférence, le premier filetage 11 présente un premier angle de filet 12, le deuxième filetage 21 présente un deuxième angle de filet 22 et la valeur du premier angle de filet 12 est supérieure de 2 à 4 degrés à la valeur du deuxième angle de filet 22. Un angle de filet est défini comme l'angle que forment les deux flancs d'un filet au niveau d'une coupe axiale du filetage.

En adaptant le dimensionnement du filetage du premier organe et/ou du deuxième organe, on peut proposer un assemblage du premier organe en matériau fragile avec le deuxième organe dont le filetage est normalisé.

Alors qu'un filetage selon l'art antérieur est conçu afin de maximiser la surface d'appui des deux filetages pour mieux répartir les différentes forces au niveau des interfaces lors de l'assemblage, avec pour conséquence que les flancs de filets des deux organes sont le plus parallèles possible, dans ce mode de réalisation, un des filetages présente un angle de filet adapté, afin que les flancs du premier filetage du premier organe soient, comme vu précédemment, en appui ou en contact contre les flancs du deuxième filetage du deuxième organe, au niveau de zones de contact s'étendant au plus près des fonds des filets du premier filetage. De préférence, les zones de contact s'étendent au plus sur une distance (mesurée radialement relativement à l'axe A10) inférieure à h/2 ou inférieure à h/4 ou inférieure à h/8 avec h correspondant à la hauteur des filets du premier filetage ou à la hauteur des filets du premier filetage.

La différence d'angle de filet des premier et deuxième filetages ne doit pas impacter significativement le comportement de l'assemblage, par exemple la tenue, l'étanchéité, le grippage, etc.

En fonction des dimensions nominales du deuxième filetage, on peut déterminer la modification de l'angle de filet du premier filetage pour que la zone de contact entre les deux filetages soit déplacée de manière adéquate (par rapport à une configuration de contact étendue quand les deux angles de filet sont identiques).

Par exemple, pour un filetage normalisé selon une norme ISO, une augmentation de 2° à 4° de l'angle de filet du premier filetage par rapport à l'angle spécifié dans la norme permet de diminuer de l'ordre de 20% les contraintes en traction comme le démontrent des calculs des inventeurs. L'angle de filet du premier filet vaut alors entre 62° à 64°. Avec un tel dimensionnement, le contact entre les flancs de filet du premier organe et les flancs de filet du deuxième organe se situe dans la partie inférieure des flancs du premier filetage, à proximité du fond de filet du premier organe.

Alternativement ou complémentairement, les filets du premier filetage peuvent être tronqués pour réduire l'aire de contact avec une hauteur des filets du premier filetage inférieure à 0.3 pas. Cette configuration permet d'éviter l'appui en « pointe » de filet du premier filetage générateur de contraintes augmentées par effet bras de levier. Dans ce mode de réalisation, les angles de filet des premier et deuxième filetages peuvent être :
- égaux, ou
- non égaux comme décrit dans les paragraphes précédents.

Les filets du premier filetage peuvent présenter des troncatures telles que les sommets des sections axiales des filets du premier filetage présentent une forme rectiligne ou convexe.

De préférence, le premier filetage présente un rayon r de fond de filet supérieur à 0.2 fois le pas du premier filetage ou supérieur à 0.4 fois le pas du premier filetage.

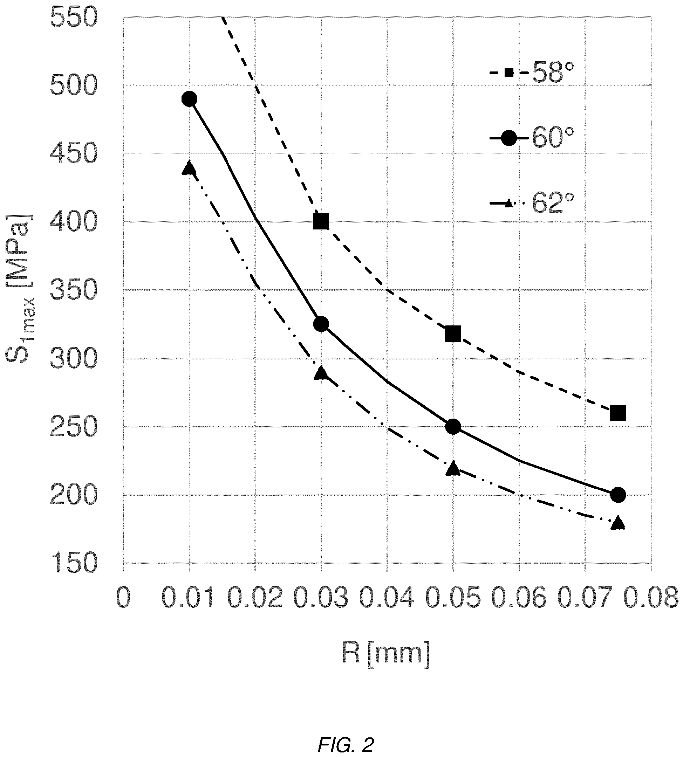

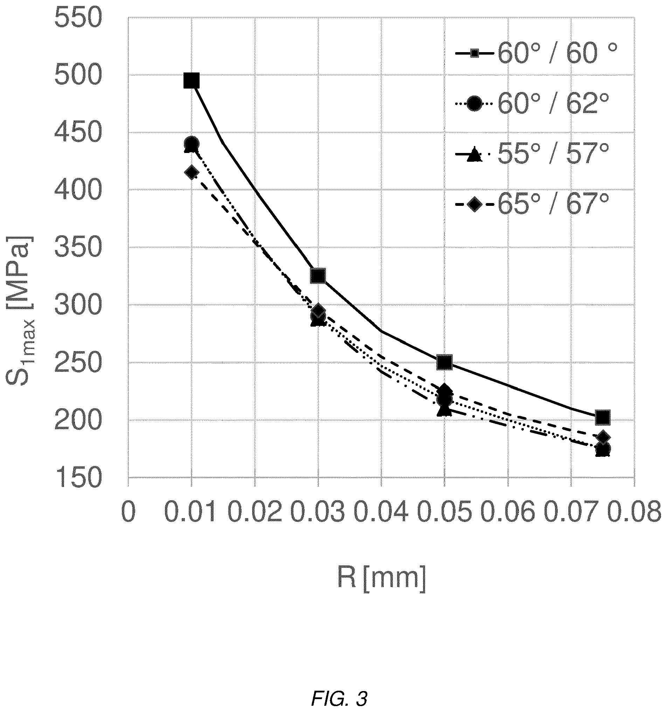

L'optimisation du rayon r du fond 15 de filet permet également de participer à la diminution des contraintes en traction dans le premier organe, comme illustré sur les graphiques des figures 2 et 3.

La figure 2 illustre, pour un fond en zircone assemblé avec une carrure en acier inoxydable comprenant un filetage normalisé (norme ISO), l'impact du rayon de fond de filet sur la contrainte subie par le filetage du fond, pour différents angles de filet du fond.

La figure 3 illustre l'utilisation d'un filet avec un angle de filet différent de 60°. Le choix de la norme du filetage n'a que peu d'influence sur les performances recherchées. C'est principalement l'utilisation d'un angle plus élevé, supérieur de 2 à 4° aux valeurs usuelles, sur le filetage du fond qui permet une diminution de la contrainte tandis que l'évolution de l'angle de filet à 55° ou 65° n'a pas beaucoup d'influence.

De préférence, lorsque le premier organe est un organe de type vis, le premier filetage est raccordé à une surface d'appui 5 par l'intermédiaire d'un congé 13 de raccordement ayant un rayon supérieur à 0.4 fois le pas p du premier filetage ou supérieur à 0.8 fois le pas p du premier filetage. Cette surface d'appui s'étend radialement vers l'extérieur depuis le premier filetage et est destiné à venir en appui contre une deuxième surface 25 prévue sur le deuxième organe horloger. Par exemple, un joint peut être disposé entre ces deux surfaces afin d'assurer une étanchéité entre les deux organes.

Par exemple, le congé 13 de raccordement fait partie d'une gorge, soit une cavité qui présente deux parois de gorge et un fond de gorge, et qui assure la liaison entre le plan d'appui 5 et le premier filetage 11. Côté filetage, une première paroi de gorge peut avoir une section axiale droite, courbe ou une combinaison des deux. La courbure peut être définie par un rayon de gorge 18a. Côté surface d'appui 5, la paroi de gorge peut avoir une section axiale droite, courbe ou une combinaison des deux. La courbure peut être définie par un rayon de gorge 18b.

Le fond de gorge peut avoir une section axiale ponctuelle, c'est-à-dire que sa section axiale peut être le point d'intersection des sections axiales des deux parois de gorge. Alternativement, le fond de gorge peut être plus étendu comme représenté sur la figure 1 où deux portions courbées 18a et 18b sont reliées par une portion à section droite.

Le premier organe subit également des contraintes en traction au voisinage de cette gorge.

Pour des composants de type boîte de montre, typiquement pour des assemblages fond-carrure, les premiers organes métalliques ont des rayons de gorge côté filet 18a et côté plan d'appui 18b compris entre 0.06 mm et 0.15 mm. Au nominal, ils sont de 0.05 mm.

Les rayons de gorge côté filet 18a et côté plan d'appui 18b peuvent être identiques ou différents.

Lorsqu'on augmente le rayon de gorge côté filet 18a de 0.1 mm à 0.2 mm, on diminue la valeur des contraintes mécaniques de l'ordre de 20 %. Lorsqu'on augmente le rayon de gorge côté filet 18a de 0.1 mm à 0.4 mm, on diminue la valeur des contraintes de l'ordre de 40 %.

L'angle de raccordement entre la gorge et le plan d'appui peut être droit, aigu ou obtus, avec ou sans piqûre dans la matière.

Le raccordement entre la gorge et le plan d'appui peut être plan ou creusé sans impact sur la résistance à la traction de la gorge.

Le deuxième filetage 21 est de préférence normalisé. En particulier, le deuxième filetage peut être un filetage normalisé selon une norme ISO ou selon une norme NIHS ou selon une norme UN ou selon une norme BSPT ou selon une norme NPT ou selon une norme NPTF ou selon une norme DIN ou selon une norme MJ ou selon une norme UNJ ou selon un profil Whitworth.

Dans l'exemple décrit et représenté sur la figure 1, le premier filetage est un filetage externe ou extérieur, c'est-à-dire qu'il est réalisé sur une surface en saille, par exemple sur une surface d'un arbre.

Dans l'exemple décrit et représenté sur la figure 1, le deuxième filetage est un filetage interne ou intérieur, c'est-à-dire qu'il est réalisé sur une surface en creux, par exemple sur une surface d'un alésage.

Dans l'exemple décrit et représenté sur la figure 1, le premier organe est un fond en matériau fragile, notamment en céramique ou en saphir ou en zircone ou en verre, dont le premier filetage est soumis à des sollicitations en traction. Le fond est assemblé à un deuxième organe qui est une carrure. Cette carrure est réalisée en un matériau plus ductile, notamment en un matériau métallique ou en alliage métallique.

Par exemple, les configurations suivantes sont envisageables :
- le premier organe horloger 10 est un fond et le deuxième organe horloger 20 est une carrure ou une carrure intérieure, ou
- le premier organe horloger 10 est une carrure ou une carrure intérieure et le deuxième organe horloger 20 est un fond, ou
- le premier organe horloger 10 est une carrure et le deuxième organe horloger 20 est une carrure intérieure, ou

- le premier organe horloger 10 est une carrure intérieure et le deuxième organe horloger 20 est une carrure, ou
- le premier organe horloger 10 est une couronne et le deuxième organe horloger 20 est un tube de couronne, ou
- le premier organe horloger 10 est un tube de couronne et le deuxième organe horloger 20 est une couronne, ou
- le premier organe horloger 10 est une couronne et le deuxième organe horloger 20 est une coiffe de couronne, ou
- l'organe horloger (10) est un tube de soupape et le deuxième organe horloger (20) est une soupape, ou
- l'organe horloger (10) est un tube de correcteur et le deuxième organe horloger (20) est un correcteur, ou
- le premier organe horloger 10 est un capot et le deuxième organe horloger 20 est une couronne ou un tube de couronne ou un canon central, ou
- le premier organe horloger 10 est une vis et le deuxième organe horloger 20 est un maillon d'un bracelet.

L'invention est transposable à tout autre type de vissage où un premier organe en matériau fragile, notamment en céramique ou en saphir ou en zircone ou en verre, coopère avec un deuxième organe réalisé en un matériau plus ductile, notamment en un matériau métallique ou en alliage métallique, pour réaliser un assemblage. L'invention est aussi transposable à tout autre type de vissage où un premier organe en matériau fragile, notamment en céramique ou en saphir ou en zircone ou en verre, coopère avec un deuxième organe en matériau fragile, notamment en céramique ou en saphir ou en zircone ou en verre, pour réaliser un assemblage. Par exemple, les premier et deuxième organes sont vissés l'un dans l'autre de sorte à ce qu'ils soient mécaniquement contraints, l'organe constituant la vis étant par exemple mécaniquement contraint en traction.

Lors de la mise en place ou montage d'un assemblage fileté, c'est-à-dire lors du vissage des premier et deuxième organes l'un dans l'autre, par rotation d'un organe autour de l'axe A10, il est primordial d'appliquer un couple de serrage provoquant des contraintes mécaniques adaptées, notamment une tension adaptée qui doit permettre de tenir compte des éléments des premier et deuxième organes venant en contact mutuel et de compenser les efforts additionnels éventuels dus à des chocs, des vibrations, une pression, des sources de dilatation ou de contraction, des variations thermiques ou hygrométriques, etc.

Lorsqu'il s'agit d'un assemblage étanche ou de sécurité, il faut en particulier maîtriser le couple de serrage appliqué. S'il est trop faible, le système risque de présenter des fuites ou de se desserrer, s'il est trop fort, on risque de détériorer, voire de casser les organes, en particulier un des filetages.

Pour les matériaux usuels, des abaques permettent de déterminer la valeur limite à adopter avant endommagement du couple vis-écrou pour des dimensions prédéterminées dans un matériau donné et dans un référentiel normatif donné. Ces abaques sont inexistants pour des couples de matière faisant intervenir des alliages métalliques et des matériaux fragiles tels une céramique, un saphir, une zircone ou un verre.

Lorsque l'on serre les organes d'un assemblage fileté, seule une partie de l'énergie de vissage/serrage contribue réellement au serrage (déformation de l'un et/ou l'autre des organes selon l'axe de la liaison hélicoïdale), le reste de l'énergie se dissipe, notamment en frottements sur les filetages. Le frottement est nécessaire pour éviter le desserrage au cours du temps.

Ces mécanismes sont toutefois susceptibles de provoquer un grippage de l'assemblage si les frottements sont trop importants.

Le seuil de grippage d'un couple de matériaux est défini par la valeur de la pression de contact à laquelle se produit un transfert de matière d'une surface à l'autre. Il existe un seuil de grippage pour chaque couple de matériaux. Outre l'état de surface, ce seuil dépend de la nature chimique et/ou métallurgique de chacun des deux matériaux en contact.

Pour les assemblages vissés, le grippage peut se produire en deux étapes : un micro-grippage, suivi, le cas échéant, d'un grippage total.

Le micro-grippage apparaît lorsque la tension n'augmente plus de façon linéaire mais par paliers tandis que le couple de serrage augmente. Il s'agit par exemple de microsoudures provoquées puis rompues par le couple de serrage appliqué au fur et à mesure de leur occurrence (phénomène de « stick-slip »). Une rotation relative demeure possible entre les éléments mais le serrage est perturbé. Ce phénomène peut être localisé.

En général, le micro-grippage s'accentue avec l'augmentation du couple de serrage jusqu'à grippage total. Lorsqu'il y a un grippage total, toute rotation est bloquée.

Un assemblage fileté précontraint demeure démontable tant qu'aucun grippage n'a lieu entre les organes après serrage. Cela implique que pour garantir la démontabilité d'un assemblage fileté, certaines précautions sont nécessaires, entre autre afin d'éviter tout micro-grippage lors du serrage initial, d'éviter toute corrosion pendant le service et de maintenir un coefficient de frottement correct pendant la vie de l'assemblage.

Il faut donc trouver des solutions pour limiter les frottements afin de rendre la plus constante possible la relation couple/tension dans l'assemblage. Par la mesure ou par des abaques, on sait déterminer à partir de quel couple de serrage le grippage risque de survenir : en effet, sachant que le coefficient de ce frottement doit être constant, à partir d'une certaine valeur de couple, une augmentation sensible de ce coefficient révèle un phénomène de grippage. Il faut donc, pour élever le seuil de grippage, agir sur le frottement au niveau des surfaces de contact de l'assemblage.

Les filetages en acier inoxydable, en aluminium et en titane sont particulièrement sujets au grippage.

Afin de minimiser, voire d'éviter ces phénomènes, les assemblages en acier inoxydable sont en général traités, par exemple avec un lubrifiant ou un revêtement « anti grippage ». Ces traitements sont susceptibles d'être dégradés avec le temps.

Pour un fond en inox assemblé sur une boîte en inox, sans lubrification, on observe déjà des problèmes de grippage avec des couples de serrage inférieurs à 3 N.m.

Il a été observé qu'un organe en céramique, par exemple en zircone, selon l'invention a une plus faible probabilité de grippage qu'un organe métallique qu'il remplace. Pour un organe en zircone, avec un couple de serrage de 5N.m, aucun grippage ni déformation n'a été observé, même sans traitement de la partie métallique.

Ainsi, les solutions décrites précédemment permettent d'éviter le grippage des éléments du système fileté, notamment lors du serrage, pour garantir la démontabilité de l'assemblage.

Le système supporte également des couples de serrage plus élevé sans grippage. Par exemple, un couple de 10 N.m a été appliqué à un fond en zircone selon l'invention, assemblé sur une carrure en acier inoxydable, sans initier de grippage ni de déformation des organes, même sans traitement de la partie métallique.

Alternativement, à la place du filetage en matériau fragile, le filetage peut être un filetage métallique céramisé, c'est-à-dire un filetage dont les surfaces de filetage sont constituées par un revêtement en céramique. La céramisation peut être obtenue par projection thermique d'une céramique, par traitement de surface, par traitement thermique ou par tout autre technique appropriée. Dans ce cas l'invention permet de minimiser les risques de fissuration ou d'ébréchure de la couche céramique ainsi que ceux de grippage de l'assemblage. Le matériau de base est, par exemple, de l'acier inoxydable, du titane, etc. La couche céramique est par exemple en céramique oxydée (zircone, alumine, titanate d'aluminium, etc) ou en céramique non oxydée comme un nitrure ou un carbure (nitrure d'aluminium, nitrure de silicium, carbure de silicium, carbure de tungstène, etc). '

Grâce à l'invention, il est possible de produire des fonds en matériaux fragiles ou en alliage métallique ayant les mêmes géométries ou sensiblement les mêmes géométries et pouvant être interchangés pour coopérer avec une même carrure, notamment une même carrure métallique. Par ailleurs, ces fonds peuvent être montés sans nécessité de modifier les outils de production ou SAV pour le montage/démontage du fond, quel que soit le matériau dans lequel est réalisé le fond.

Grâce à l'invention, il est possible de réaliser une boîte de montre-bracelet étanche comportant un fond en matériau fragile notamment en céramique, en saphir, en zircone ou en verre, en remplacement d'un fond métallique sans adaptation de la carrure métallique.

Grâce à l'invention, il est possible de modifier le filetage du fond en matériau fragile afin de préserver son intégrité lors du vissage, dans une condition de serrage et d'utilisation identique à celle d'un fond en métal. De plus, les problèmes de grippage rencontrés avec des fonds en métal sont évités, même avec des couples de serrage plus élevés que ceux usuellement utilisés avec des fonds en alliage métallique.

Ainsi, grâce à l'invention, il est possible de dimensionner spécifiquement un filetage d'un organe en matériau de type fragile afin que le filetage résiste aux mêmes gammes de contraintes qu'une pièce métallique que l'organe remplace et afin que le filetage soit compatible avec les filetages standards, par exemple des filetages selon les normes de l'horlogerie suisse (NIHS). Le dimensionnement tient compte de l'ordre de grandeur des champs de contraintes et des probabilités de rupture de l'organe en matériau de type fragile.

Dans l'intention de pouvoir proposer des fonds en céramique, il existe en effet un intérêt pour une solution de dimensionnement d'un filetage de vissage sur un matériau de type fragile, notamment en céramique, qui soit compatible avec les filetages normalisés et qui permette l'assemblage de pièces en matériau de type fragile par vissage. Un fond en céramique monté sur une carrure métallique avec un filetage ayant une résistance améliorée - en particulier vis-à-vis des contraintes induites lors de l'assemblage et/ou par l'environnement, par exemple par la compression de l'assemblage lors de plongées - offre un exemple d'un tel intérêt.

Cette conception permet ainsi avantageusement le remplacement aisé d'un fond métallique par un fond en céramique sans nécessiter de modifier la conception de la pièce métallique qui le reçoit et/ou les outils de montage/démontage du fond, tout en garantissant une étanchéité conforme, un montage sécurisé et en minimisant les risques de grippage.

Au contraire, selon l'art antérieur, les filets extérieur et intérieur sont usinés selon une même classe avec la même tolérance, afin d'être compatibles et de maximiser la surface de contact entre les filets extérieur et intérieur. Lorsque les filets extérieur et intérieur sont usinés selon une même classe, en tenant compte des tolérances, les flancs du filetage intérieur et les flancs du filetage extérieur sont en contact sur la plus grande surface possible, les flancs étant le plus « plats » possibles. Ce dimensionnement selon l'état de l'art avait pour but de maîtriser l'assemblage, notamment l'arrachement des filets, et les phénomènes de grippage et d'optimiser la tenue de l'assemblage.

Selon un autre aspect de l'invention, un assemblage, notamment une boîte de pièce d'horlogerie, comprend :
- un premier organe 10 réalisé en matériau de type fragile, notamment en céramique ou en saphir ou en zircone ou en verre, ou ayant des surfaces de filetage constituées par un revêtement en matériau de type fragile, notamment en céramique ou en saphir ou en zircone ou en verre, et
- un deuxième organe 20 réalisé en matériau métallique ou en alliage métallique, notamment réalisé en matériau métallique ou en alliage métallique principalement.

Les premier et deuxième organes sont avantageusement liés par une liaison filetée, soit assemblés l'un à l'autre par vissage.

Selon cet autre aspect de l'invention, une pièce d'horlogerie comprend un tel assemblage.

## Revendications

1. Organe horloger (10) comprenant un premier axe (A10) et un premier filetage (11) présentant un pas (p) et destiné à coopérer avec un deuxième filetage (21) prévu sur un deuxième organe horloger (20), le premier filetage étant configuré de sorte qu'une zone de contact (C) entre le premier filetage et le deuxième filetage s'étend sur moins de 50% de la hauteur (h) des filets du deuxième filetage ou configuré de sorte que la zone de contact (C) entre le premier filetage et le deuxième filetage s'étend sur moins de 0.3 fois le pas (p), l'étendue (e) de la zone de contact étant mesurée radialement relativement au premier axe (A10) depuis le fond (15) des filets du premier filetage.

2. Organe horloger selon la revendication précédente, **caractérisé en ce que** le premier filetage (11) présente un premier angle de filet (12), **en ce que** le deuxième filetage (21) présente un deuxième angle de filet (22) et **en ce que** la valeur du premier angle de filet (12) est supérieure de 2 à 4 degrés à la valeur du deuxième angle de filet (22).

3. Organe horloger selon la revendication 1 ou 2, **caractérisé en ce que** la hauteur des filets du premier filetage est inférieure à 0.3 pas

4. Organe horloger selon l'une des revendications précédentes, **caractérisé en ce que** le premier filetage présente un rayon de fond (15) de filet supérieur à 0.2 fois le pas du premier filetage ou supérieur à 0.4 fois le pas du premier filetage.

5. Organe horloger selon l'une des revendications précédentes, **caractérisé en ce que** le premier filetage est raccordé à une surface d'appui (5) par l'intermédiaire d'un congé (13) de raccordement ayant un rayon (18b) supérieur à 0.4 fois le pas du premier filetage ou supérieur à 0.8 fois le pas du premier filetage.

6. Organe horloger selon l'une des revendications précédentes, **caractérisé en ce que** le deuxième filetage est un filetage normalisé, notamment un filetage normalisé selon une norme ISO ou selon une norme NIHS ou selon une norme UN ou selon une norme BSPT ou selon une norme NPT ou selon une norme NPTF ou selon une norme DIN ou selon une norme MJ ou selon une norme UNJ ou selon un profil Whitworth.

7. Organe horloger selon l'une des revendications précédentes, **caractérisé en ce que** l'organe horloger (10) est réalisé en matériau de type fragile, notamment en céramique ou en saphir ou en zircone ou en verre, ou **en ce que** l'organe horloger (10) est réalisé en matériau métallique ou en alliage métallique principalement et le premier filetage présente des surfaces constituées par un revêtement en matériau de type fragile, notamment en céramique.

8. Organe horloger (10) selon l'une des revendications précédentes **caractérisé en ce que** :
l'organe horloger (10) est un fond et le deuxième organe horloger (20) est une carrure ou une carrure intérieure; ou
l'organe horloger (10) est une carrure ou une carrure intérieure et le deuxième organe horloger (20) est un fond ; ou
l'organe horloger (10) est une carrure et le deuxième organe horloger (20) est une carrure intérieure; ou
l'organe horloger (10) est une carrure intérieure et le deuxième organe horloger (20) est une carrure; ou
l'organe horloger (10) est une couronne et le deuxième organe horloger (20) est un tube de couronne; ou
l'organe horloger (10) est un tube de couronne et le deuxième organe horloger (20) est une couronne; ou
l'organe horloger (10) est une couronne et le deuxième organe horloger (20) est une coiffe de couronne; ou
l'organe horloger (10) est un tube de soupape et le deuxième organe horloger (20) est une soupape; ou
l'organe horloger (10) est un tube de correcteur et le deuxième organe horloger (20) est un correcteur; ou
l'organe horloger (10) est un capot et le deuxième organe horloger (20) est une couronne ou un tube de couronne ou un canon central ; ou
l'organe horloger (10) est une vis et le deuxième organe horloger (20) est un maillon de bracelet.

9. Boîte (100) de pièce d'horlogerie (200), comprenant un premier organe horloger (10) selon l'une des revendications 1 à 8 et un autre organe horloger (20), notamment un autre organe horloger selon l'une des revendications 1 à 8 et/ou un autre organe horloger vissé sur ou dans le premier organe.

10. Boîte (100) de pièce d'horlogerie (200), comprenant une carrure (20), notamment une carrure métallique, constituant le deuxième organe horloger (20) selon l'une des revendications 1 à 8, et un fond (10) constituant l'organe horloger (10) selon l'une des revendications 1 à 8.

11. Boîte (100) de pièce d'horlogerie (200), comprenant un fond (20), notamment un fond métallique, constituant le deuxième organe horloger (20) selon l'une des revendications 1 à 8, et une carrure (10) constituant le premier organe horloger (10) selon l'une des revendications 1 à 8.

12. Pièce d'horlogerie (200), notamment montre, en particulier montre bracelet, comprenant un organe horloger selon l'une des revendications 1 à 8 et/ou une boîte (100) de pièce d'horlogerie (200) selon l'une des revendications 9 à 11.

## Patentansprüche

1. Uhrenorgan (10), das eine erste Achse (A10) und ein erstes Gewinde (11), das eine Steigung (p) aufweist und dazu bestimmt ist, mit einem zweiten Gewinde (21), das an einem zweiten Uhrenorgan (20) vorgesehen ist, zusammenzuwirken, beinhaltet, wobei das erste Gewinde so konfiguriert ist, dass sich ein Kontaktbereich (C) zwischen dem ersten Gewinde und dem zweiten Gewinde über weniger als 50 % der Höhe (h) der Gewindeelemente des zweiten Gewindes erstreckt, oder so konfiguriert ist, dass sich der Kontaktbereich (C) zwischen dem ersten Gewinde und dem zweiten Gewinde über weniger als das 0,3-fache der Steigung (p) erstreckt, wobei die Erstreckung (e) des Kontaktbereichs von dem Boden (15) der Gewindeelemente des ersten Gewindes aus radial zu der ersten Achse (A10) gemessen wird.

2. Uhrenorgan nach dem vorhergehenden Anspruch, **dadurch gekennzeichnet, dass** das erste Gewinde (11) einen ersten Flankenwinkel (12) aufweist, dass das zweite Gewinde (21) einen zweiten Flankenwinkel (22) aufweist und dass der Wert des ersten Flankenwinkels (12) um 2 bis 4 Grad größer ist als der Wert des zweiten Flankenwinkels (22) .

3. Uhrenorgan nach Anspruch 1 oder 2, **dadurch gekennzeichnet, dass** die Höhe der Gewindeelemente des ersten Gewindes kleiner als das 0,3-fache der Steigung ist.

4. Uhrenorgan nach einem der vorhergehenden Ansprüche, **dadurch gekennzeichnet, dass** das erste Gewinde einen Gewindegrundradius (15) aufweist, der größer als das 0,2-fache der Steigung des ersten Gewindes ist oder größer als das 0,4-fache der Steigung des ersten Gewindes ist.

5. Uhrenorgan nach einem der vorhergehenden Ansprüche, **dadurch gekennzeichnet, dass** das erste Gewinde mittels einer Anschlussausrundung (13), die einen Radius (18b) aufweist, der größer als das 0,4-fache der Steigung des ersten Gewindes oder größer als das 0,8-fache der Steigung des ersten Gewindes ist, an eine Auflagefläche (5) angeschlossen ist.

6. Uhrenorgan nach einem der vorhergehenden Ansprüche, **dadurch gekennzeichnet, dass** das zweite Gewinde ein normiertes Gewinde ist, insbesondere ein nach einer ISO-Norm oder nach einer NIHS-Norm oder nach einer UN-Norm oder nach einer BSPT-Norm oder nach einer NPT-Norm oder nach einer NPTF-Norm oder nach einer DIN-Norm oder nach einer MJ-Norm oder nach einer UNJ-Norm oder nach einem Whitworth-Profil normiertes Gewinde.

7. Uhrenorgan nach einem der vorhergehenden Ansprüche, **dadurch gekennzeichnet, dass** das Uhrenorgan (10) aus einem Material spröden Typs, insbesondere aus Keramik oder aus Saphir oder aus Zirconiumdioxid oder aus Glas, hergestellt ist oder dass das Uhrenorgan (10) hauptsächlich aus einem metallischen Material oder einer Metalllegierung hergestellt ist und das erste Gewinde Oberflächen aufweist, die aus einer Beschichtung aus einem Material spröden Typs, insbesondere aus Keramik, bestehen.

8. Uhrenorgan (10) nach einem der vorhergehenden Ansprüche, **dadurch gekennzeichnet, dass**:
das Uhrenorgan (10) ein Boden ist und das zweite Uhrenorgan (20) ein Mittelteil oder ein Innenmittelteil ist; oder
das Uhrenorgan (10) ein Mittelteil oder ein Innenmittelteil ist und das zweite Uhrenorgan (20) ein Boden ist; oder
das Uhrenorgan (10) ein Mittelteil ist und das zweite Uhrenorgan (20) ein Innenmittelteil ist; oder
das Uhrenorgan (10) ein Innenmittelteil und das zweite Uhrenorgan (20) ein Mittelteil ist; oder
das Uhrenorgan (10) eine Krone ist und das zweite Uhrenorgan (20) eine Kronenröhre ist; oder
das Uhrenorgan (10) eine Kronenröhre ist und das zweite Uhrenorgan (20) eine Krone ist; oder
das Uhrenorgan (10) eine Krone ist und das zweite Uhrenorgan (20) eine Kronenkappe ist; oder
das Uhrenorgan (10) eine Ventilröhre ist und das zweite Uhrenorgan (20) ein Ventil ist; oder
das Uhrenorgan (10) eine Korrektorröhre ist und das zweite Uhrenorgan (20) ein Korrektor ist; oder
das Uhrenorgan (10) eine Abdeckung ist und das zweite Uhrenorgan (20) eine Krone oder eine Kronenröhre oder ein Schaft ist; oder
das Uhrenorgan (10) eine Schraube ist und das zweite Uhrenorgan (20) ein Glied eines Armbands ist.

9. Gehäuse (100) einer Uhr (200), das ein erstes Uhrenorgan (10) nach einem der Ansprüche 1 bis 8 und ein anderes Uhrenorgan (20), insbesondere ein anderes Uhrenorgan nach einem der Ansprüche 1 bis 8 und/oder ein anderes Uhrenorgan, das auf oder in das erste Organ geschraubt ist, beinhaltet.

10. Gehäuse (100) einer Uhr (200), das ein Mittelteil (20), insbesondere ein Mittelteil aus Metall, das das zweite Uhrenorgan (20) nach einem der Ansprüche 1 bis 8 bildet, und einen Boden (10), der das Uhrenorgan (10) nach einem der Ansprüche 1 bis 8 bildet, beinhaltet.

11. Gehäuse (100) einer Uhr (200), das einen Boden (20), insbesondere einen Boden aus Metall, der das zweite Uhrenorgan (20) nach einem der Ansprüche 1 bis 8 bildet, und ein Mittelteil (10), das das erste Uhrenorgan (10) nach einem der Ansprüche 1 bis 8 bildet, beinhaltet.

12. Uhr (200), insbesondere eine Armbanduhr, insbesondere eine Armbanduhr mit einem Uhrenarmband, die ein Uhrenorgan nach einem der Ansprüche 1 bis 8 und/oder ein Gehäuse (100) einer Uhr (200) nach einem der Ansprüche 9 bis 11 beinhaltet.

## Claims

1. A timepiece member (10) including a first axis (A10) and a first threading (11) having a pitch (p) and intended to cooperate with a second threading (21) provided on a second timepiece member (20), the first threading being configured so that a zone (C) of contact between the first threading and the second threading extends over less than 50% of the height (h) of the threads of the second threading or configured so that the zone (C) of contact between the first threading and the second threading extends over less than 0.3 times the pitch (p), the extent (e) of the contact zone being measured radially relative to the first axis (A10) from the root (15) of the threads of the first threading.

2. The timepiece member as claimed in the preceding claim, wherein the first threading (11) has a first thread angle (12), wherein the second threading (21) has a second thread angle (22) and wherein the value of the first thread angle (12) is 2 to 4 degrees greater than the value of the second thread angle (22).

3. The timepiece member as claimed in claim 1 or 2, wherein the height of the threads of the first threading is less than 0.3 pitch.

4. The timepiece member as claimed in any one of the preceding claims, wherein the first threading has a thread root radius (15) greater than 0.2 times the pitch of the first threading or greater than 0.4 times the pitch of the first threading.

5. The timepiece member as claimed in any one of the preceding claims, wherein the first threading is connected to a bearing surface (5) by means of a connecting fillet (13) having a radius (18b) greater than 0.4 times the pitch of the first threading or greater than 0.8 times the pitch of the first threading.

6. The timepiece member as claimed in any one of the preceding claims, wherein the second threading is a normalized thread, in particular a thread conforming to an ISO standard or an NIHS standard or a UN standard or a BSPT standard or an NPT standard or an NPTF standard or a DIN standard or an MJ standard or a UNJ standard or in accordance with a Whitworth profile.

7. The timepiece member as claimed in any one of the preceding claims, wherein the timepiece member (10) is made of a fragile type material, in particular of ceramic or of sapphire or of zirconia or of glass, or wherein the timepiece member (10) is made mainly of metal or metal alloy and the first threading has surfaces consisting of a fragile type material, in particular ceramic, coating.

8. The timepiece member (10) as claimed in any one of the preceding claims, wherein:
the timepiece member (10) is a back and the second timepiece member (20) is a middle or an interior middle; or
the timepiece member (10) is a middle or an interior middle and the second timepiece member (20) is a back; or
the timepiece member (10) is a middle and the second timepiece member (20) is an interior middle; or
the timepiece member (10) is an interior middle and the second timepiece member (20) is a middle; or
the timepiece member (10) is a crown and the second timepiece member (20) is a crown tube; or
the timepiece member (10) is a crown tube and the second timepiece member (20) is a crown; or
the timepiece member (10) is a crown and the second timepiece member (20) is a crown cap; or
the timepiece member (10) is a valve tube and the second timepiece member (20) is a valve; or
the timepiece member (10) is a corrector tube and the second timepiece member (20) is a corrector; or
the timepiece member (10) is a cap and the second timepiece member (20) is a crown or a crown tube or a central cannon; or
the timepiece member (10) is a screw and the second timepiece member (20) is a bracelet link.

9. A case (100) for a timepiece part (200), including a first timepiece member (10) as claimed in any one of claims 1 to 8 and another timepiece member (20), in particular another timepiece member as claimed in any one of claims 1 to 8, and/or another timepiece member screwed onto or into the first member.

10. A case (100) of a timepiece (200), including a middle (20), in particular a metal middle constituting a second timepiece member (20) as claimed in any one of claims 1 to 8, and a back (10) constituting a first timepiece member (10) as claimed in any one of claims 1 to 8.

11. A case (100) for a timepiece part (200) including a back (20), in particular a metal back constituting a second timepiece member (20) as claimed in any one of claims 1 to 8, and a middle (10) constituting a first timepiece member (10) as claimed in any one of claims 1 to 8.

12. A timepiece (200), in particular a watch, in particular a wristwatch, including a timepiece member as claimed in any one of claims 1 to 8 and/or a case (100) for a timepiece (200) as claimed in any one of claims 9 to 11.
